# EUROPÄISCHE PATENTANMELDUNG

(11) **EP 4 647 230 A1**
(43) Veröffentlichungstag der Anmeldung: **12.11.2025**
(21) Anmeldenummer: 24174706.2
(22) Anmeldetag: 08.05.2024
(51) Int. Cl.: B29C 45/04, B29C 45/16, B29C 45/26, F16H 21/04, F16H 25/12

(54) **GETRIEBEVORRICHTUNG, FORMGEBUNGSWERKZEUG UND FORMGEBUNGSVORRICHTUNG**

(71) Anmelder: Faßnacht, Wolfgang, 86399 Bobingen (DE)
(72) Erfinder: Faßnacht, Wolfgang, 86399 Bobingen (DE)
(74) Vertreter: Wiedemann, Markus

(57) **Zusammenfassung**

Die Erfindung offenbart eine Getriebevorrichtung (20), welche ausgebildet und eingerichtet ist, eine Antriebsbewegung eines Antriebs in eine lineare und rotatorische Bewegung eines ersten Werkzeugteils (21) eines Formgebungswerkzeugs (22) einer Formgebungsvorrichtung, insbesondere einer Kunststoff-Spritzgussvorrichtung umzusetzen, mindestens umfassend eine Welle (23) mit einer Wellenachse (24), einer ersten Schnittstelle (25) und einer zweiten Schnittstelle (26), wobei die erste Schnittstelle (25) ausgebildet ist, um die Welle mit dem ersten Werkzeugteil (21) zu verbinden, und die zweite Schnittstelle (26) ausgebildet ist, um die Welle (23) mit dem Antrieb wenigstens axialfest zu verbinden, und ein Gehäuse, in welchem die Welle (23) um die Wellenachse (24) drehbar und parallel zur Wellenachse (24) linear beweglich geführt ist. Die Erfindung sieht vor, dass an einer radial äußeren Umfangsfläche der Welle (23) wenigstens eine radiale Ausnehmung (28) und an einem Führungselement (27) des Gehäuses wenigstens ein mit der wenigstens einen radialen Ausnehmung (28) zusammenwirkender radialer Vorsprung (29, 30) angeordnet oder ausgebildet ist, wobei der wenigstens eine radiale Vorsprung (29, 30) ausgehend von wenigstens einem linearen Ausnehmungsabschnitt (31, 32) in wenigstens einen wendelförmigen Ausnehmungsabschnitt (33, 34) und/oder ausgehend von wenigstens einem wendelförmigen Ausnehmungsabschnitt (33, 34) in wenigstens einen linearen Ausnehmungsabschnitt (31, 32) gleiten kann, wenn die Welle (23) mittels des Antriebs lediglich linear und parallel zur Wellenachse (24) betätigt wird.

## Beschreibung

Die Erfindung betrifft eine Getriebevorrichtung, welche ausgebildet und eingerichtet ist, eine Antriebsbewegung wenigstens eines Antriebs in eine lineare und rotatorische Bewegung eines ersten Werkzeugteils eines Formgebungswerkzeugs einer Formgebungsvorrichtung, insbesondere einer Kunststoff-Spritzgussvorrichtung umzusetzen, ein Formgebungswerkwerkzeug einer Formgebungsvorrichtung, insbesondere ein Spritzgusswerkzeug einer Kunststoff-Spritzgussvorrichtung gemäß dem Oberbegriff von Anspruch 10 sowie eine Formgebungsvorrichtung, insbesondere eine Kunststoff-Spritzgussvorrichtung, ausgebildet und eingerichtet zum Spritzgießen von Kunststoff-Spritzgussformteilen, insbesondere zum Mehrkomponenten-Spritzgießen von Mehrkomponenten-Kunststoff-Spritzgussformteilen gemäß dem Oberbegriff von Anspruch 15.

Für die Herstellung von mehrkomponentigen oder mehrfarbigen Spritzgussteilen sind verschiedene Verfahren bekannt. Beim Indexplattenverfahren ist das Spritzgießwerkzeug derart ausgeführt, dass eine Indexplatte eine zentrale Achse drehbar und axial verschoben werden kann. Die Indexplatte umfasst dabei wenigstens einen Teil einer ersten Kavität oder ersten Formnests, in der oder in der ein Vorspritzling entsteht, der unverändert bleiben kann. Nach dem Abheben von einem feststehenden Werkzeugteil dreht die Indexplatte um einen vorbestimmten Winkel und der Vorspritzling wird in eine zweite Kavität oder in eine zweites Formnest transportiert, in der eine zweite Komponente dem Vorspritzling angespritzt wird. Es ist daher erforderlich, die Indexplatte einerseits linear und andererseits rotatorisch in Bezug zu dem feststehenden Werkzeugteil zu bewegen, was im Stand der Technik mittels zweier unterschiedlicher Antriebe bewerkstelligt wird, nämlich mit Hilfe eines linearen Antriebs, welche eine mit der Indexplatte verbundene Indexwelle linear bewegt und mittels eines zusätzlichen rotatorischen Antriebs, welcher die Indexwelle rotatorisch antreibt.

Aus dem Stand der Technik, beispielsweise aus AT 505 692 B1 sind eine gattungsgemäße Getriebevorrichtung, ein gattungsgemäßes Formgebungswerkzeug sowie eine gattungsgemäße Formgebungsvorrichtung bekannt. Dabei wird die lineare Bewegung von Indexwelle und Indexplatte durch Hydraulikzylinder und die Drehung von Indexwelle und Indexplatte durch einen Elektromotor bewerkstelligt, wobei die Drehung von dessen Rotor durch eine Getriebevorrichtung auf die Indexwelle übertragen wird. Demzufolge sind dort zwei unterschiedliche Antriebe vorgesehen, um eine lineare und rotatorische Bewegung von Indexwelle und Indexplatte zu realisieren.

Der Erfindung liegt demgegenüber die Aufgabe zugrunde, eine Getriebevorrichtung für ein Formgebungswerkzeug zur Verfügung zu stellen, welche mit einfacheren Mitteln eine lineare und rotatorische Bewegung eines Werkzeugteils des Formgebungswerkzeugs ermöglicht. Auch soll ein Formgebungswerkzeug mit einer solchen Getriebevorrichtung und eine Formgebungsvorrichtung mit einem solchen Formgebungswerkzeug zur Verfügung gestellt werden.

Diese Aufgabe wird erfindungsgemäß durch die Merkmale der Ansprüche 1, 10 und 15 gelöst.

### Offenbarung der Erfindung

Die Erfindung offenbart in einem ersten Aspekt eine Getriebevorrichtung, welche ausgebildet und eingerichtet ist, eine Antriebsbewegung eines Antriebs in eine lineare und rotatorische Bewegung eines ersten Werkzeugteils eines Formgebungswerkzeugs einer Formgebungsvorrichtung, insbesondere einer Kunststoff-Spritzgussvorrichtung umzusetzen, mindestens umfassend
a) eine Welle mit einer Wellenachse, einer ersten Schnittstelle und einer zweiten Schnittstelle, wobei die erste Schnittstelle ausgebildet ist, um die Welle mit dem ersten Werkzeugteil wenigstens drehfest zu verbinden, und die zweite Schnittstelle ausgebildet ist, um die Welle mit dem Antrieb wenigstens axialfest zu verbinden, und
b) ein Gehäuse, in welchem die Welle um die Wellenachse drehbar und parallel zur Wellenachse linear beweglich geführt ist, wobei
c) an einer radial äußeren Umfangsfläche der Welle wenigstens eine radiale Ausnehmung und an einem Führungselement des Gehäuses wenigstens ein mit der Ausnehmung zusammenwirkender radialen Vorsprung angeordnet ist, oder
d) an einer radial äußeren Umfangsfläche die Welle ein radialer Vorsprung und an einer radial inneren Umfangsfläche eines Führungselements des Gehäuses wenigstens eine mit dem radialen Vorsprung zusammenwirkende radiale Ausnehmung angeordnet ist, und wobei
e) die wenigstens eine radiale Ausnehmung wenigstens einen linearen Ausnehmungsabschnitt parallel zur Wellenachse sowie wenigstens einen in koaxial in Bezug zur Wellenachse wendelförmigen Ausnehmungabschnitt umfasst und der wenigstens eine radiale Vorsprung in die wenigstens eine radiale Ausnehmung radial hineinragt und ausgeführt ist, dass er entlang oder in der wenigstens einen radialen Ausnehmung gleiten kann, und wobei
f) der wenigstens eine lineare Ausnehmungsabschnitt und der wenigstens eine wendelförmige Ausnehmungsabschnitt derart aneinander anschließen, dass der wenigstens eine radiale Vorsprung ausgehend von dem wenigstens einen linearen Ausnehmungsabschnitt in den wenigstens einen wendelförmigen Ausnehmungsabschnitt und/oder ausgehend von dem wenigstens einen wendelförmigen Ausnehmungsabschnitt in den wenigstens einen linearen Ausnehmungsabschnitt gleiten kann, wenn die Welle mittels des Antriebs ausschließlich oder lediglich linear und parallel zur Wellenachse betätigt wird.

Lediglich oder ausschließlich durch eine linear und parallel zur Wellenachse erfolgte Betätigung der Welle kann dann der wenigstens eine radiale Vorsprung in serieller Weise mit einem linearen Ausnehmungsabschnitt und mit einem wendel-oder schraubenförmigen Ausnehmungsabschnitt zusammenwirken, wodurch eine Kinematik entsteht, die eine kombinierte Linear- und Rotationsbewegung der Welle hervorruft. Für die dann lediglich linear und parallel zur Wellenachse erforderliche Betätigung der Welle ist dann nur noch ein einziger Antrieb notwendig, der die Welle linear parallel zur Wellenachse betätigen kann, nämlich insbesondere ein Linearantrieb. Der zusätzliche Rotationsantrieb des Stands der Technik kann dann entfallen.

Eine gewünschte Kombination aus Linear- und Rotationsbewegung der Welle ist dann durch eine entsprechende (serielle) Anordnung von linearen und wendel-oder schraubenförmigen Ausnehmungsabschnitten an der Welle oder an dem Führungselement realisierbar.

Die Getriebevorrichtung schließt daher zwei grundsätzliche Ausführungen ein, nämlich eine erste Ausführung, bei welcher die radiale Ausnehmung an der Welle und der radiale Vorsprung an dem Führungselement ausgebildet ist, sowie eine diesbezüglich kinematisch umgekehrte zweite Ausführung, bei welcher die radiale Ausnehmung an dem Führungselement und der radiale Vorsprung an der Welle angeordnet ist.

Das Führungselement kann insbesondere wenigstens eine Buchse oder einen buchsenförmigen Körper enthalten, welche mit dem Gehäuse verbunden ist. Dann kann, je nach Ausführung, entweder der wenigstens eine radiale Vorsprung oder die wenigstens eine radiale Ausnehmung an einer radial inneren Umfangsfläche der Buchse ausgebildet sein.

Mit der erfindungsgemäßen Getriebevorrichtung wird im Wesentlichen eine lineare und rotatorische Zwangsführung zwischen der Welle und dem Führungselement realisiert. Ein weiterer Vorteil liegt dann darin, dass lediglich durch einen Austausch der Welle und/oder des Führungselements, je nachdem wo die wenigstens eine radiale Ausnehmung angeordnet ist, dann eine veränderte Kinematik in Bezug auf das lineare und rotatorische Bewegungsspektrum der Welle realisiert werden kann.

In den Unteransprüchen sind vorteilhafte Weiterbildungen der Getriebevorrichtung nach Anspruch 1 aufgeführt.

Besonders bevorzugt wirkt der wenigstens eine radiale Vorsprung mit der wenigstens einen radialen Ausnehmung derart zusammen, dass allein oder lediglich durch die lineare Betätigung der Welle mittels des Antriebs parallel zur Wellenachse
a) die Welle parallel zur Wellenachse linear verschoben wird, wenn im Laufe der linearen Betätigung der Welle der radiale Vorsprung in Eingriff mit dem wenigstens einen linearen Ausnehmungsabschnitt gelangt oder steht, und
b) die Welle parallel zur Wellenachse linear verschoben wird und zusätzlich um die Wellenachse dreht, wenn der Vorsprung im Laufe der linearen Betätigung der Welle in Eingriff mit dem wenigstens einen wendelförmigen Ausnehmungsabschnitt gelangt oder steht.

Eine fertigungstechnisch einfach zu realisierende Ausführung liegt vor, wenn die wenigstens eine radiale Ausnehmung als Nut und der wenigstens eine radiale Vorsprung als in die Nut radial hineinragender Nutenstein ausgebildet ist.

Insbesondere kann die Welle und/oder das Führungselement selbst als Spritzgussformling(e) ausgebildet und/oder im spanabhebenden Verfahren oder additiv hergestellt sein.

Eine besonders führungsstabile Ausführung kann dadurch gegeben sein, dass bei der Getriebevorrichtung mehrere insbesondere in Bezug zur Wellenachse diametral gegenüberliegend angeordnete radiale Vorsprünge vorgesehen werden, welche gleichzeitig
a) mit mehreren linearen Ausnehmungen, und/oder
b) mit mehreren wendelförmigen Ausnehmungen zusammenwirken.

Auch kann der wenigstens eine wendelförmige Ausnehmungsabschnitt derart ausgeführt sein, dass die Welle sich um einen bestimmten Winkel, insbesondere um 90 Grad dreht, wenn der wenigstens eine radiale Vorsprung zwischen zwei Enden des wenigstens einen wendelförmigen Ausnehmungsabschnitts gleitet.

Weiterbildend kann bei der Getriebevorrichtung auch vorgesehen sein, dass an wenigstens einer Verzweigungs- und Vereinigungsstelle der radialen Ausnehmung
a) wenigstens ein wendelförmiger Ausnehmungsabschnitt an wenigstens einen linearen Ausnehmungsabschnitt anschließt, und/oder
b) wenigstens ein linearer Ausnehmungsabschnitt an wenigstens einen wendelförmigen Ausnehmungabschnitt anschließt.

Besonders bevorzugt können bei der Getriebevorrichtung der wenigstens eine lineare Ausnehmungsabschnitt und der wenigstens eine wendelförmige Ausnehmungsabschnitt auch derart ausgeführt und angeordnet sein, dass die Welle infolge einer ersten linearen Betätigung in einer ersten linearen Betätigungsrichtung von einer linearen Ausgangsposition bis zu einer linearen Umkehrposition und infolge einer insbesondere anschließenden zweiten, in Bezug zur ersten linearen Betätigung der Welle entgegengerichteten zweiten linearen Betätigung in einer zweiten linearen Betätigungsrichtung von der linearen Umkehrposition zurück bis in die lineare Ausgangsposition eine Drehung um einen vorbestimmten Winkel vollzieht, insbesondere um 180 Grad.

Wenn beispielsweise zwei wendelförmige Ausnehmungsabschnitte an einen linearen Ausnehmungsabschnitt anschließen, so können diese ausgehend von der Verzweigungs- und Vereinigungsstelle insbesondere in einem spitzen Winkel divergieren. Umgekehrt, wenn beispielsweise ein linearer Ausnehmungsabschnitt an zwei wendelförmige Ausnehmungsabschnitte anschließt, dann können die beiden wendelförmige Ausnehmungsabschnitte an der Verzweigungs- und Vereinigungsstelle insbesondere in einem spitzen Winkel konvergieren.

Um an der Verzweigungs- und Vereinigungsstelle ein sicheres Eingleiten oder Eintauchen des radialen Vorsprungs in eine der beiden wendelförmigen Ausnehmungabschnitte zu gewährleisten, kann auch vorgesehen sein, dass der eine wendelförmige Ausnehmungabschnitt der beiden wendelförmigen Ausnehmungabschnitte in Bezug zu dem anderen der beiden wendelförmigen Ausnehmungabschnitte in Bezug zur Wellenachse linear versetzt angeordnet ist.

Bei zwei entgegengerichteten linearen Betätigungen der Welle, nämlich einer ersten Betätigung der Welle in einer ersten Betätigungsrichtung und einer zweiten Betätigung der Welle in einer zweiten Betätigungsrichtung, kann eine Drehung der Welle um beispielsweise 180 Grad in Kombination mit einer hin-und hergehenden (reversierenden) linearen Bewegung der Welle und damit auch des ersten Werkzeugteils zwischen einer linearen Ausgangsposition und einer linearen Umkehrposition realisiert werden.

Bei der Getriebevorrichtung können auch mindestens vorgesehen sein:
a) Zwei lineare erste Ausnehmungsabschnitte und zwei lineare zweite Ausnehmungsabschnitte, jeweils diametral in Bezug zur Wellenachse angeordnet, und
b) zwei wendelförmige erste Ausnehmungsabschnitte und zwei wendelförmige zweite Ausnehmungsabschnitte, wobei die wendelförmigen ersten und zweiten Ausnehmungsabschnitte koaxial in Bezug zur Wellenachse sind, und
c) zwei erste Verzweigungs- und Vereinigungsstelle zwischen den linearen ersten Ausnehmungsabschnitten und den wendelförmigen ersten und zweiten Ausnehmungsabschnitten und zwei zweite Verzweigungs- und Vereinigungsstellen zwischen den wendelförmigen ersten und zweiten Ausnehmungsabschnitten und den linearen zweiten Ausnehmungsabschnitten, wobei die ersten und zweiten Verzweigungs-und Vereinigungsstellen jeweils diametral in Bezug zur Wellenachse angeordnet sind, und
d) zwei radiale Vorsprünge, ein erster radialer Vorsprung und ein zweiter radialer Vorsprung, diametral in Bezug zur Wellenachse angeordnet.

Beispielsweise kann die Getriebevorrichtung derart ausgebildet sein, dass
a) wenn die Welle im Laufe der ersten linearen Betätigung in der ersten linearen Betätigungsrichtung ausgehend von der linearen Ausgangsposition betätigt wird, die radialen Vorsprünge entlang der ersten linearen Ausnehmungsabschnitte gleiten, was insbesondere eine Translation der Welle in der ersten linearen Betätigungsrichtung bewirkt, und dann
b) im Laufe der fortgesetzten ersten linearen Betätigung an den ersten Verzweigungs- und Vereinigungsstellen aus den linearen ersten Ausnehmungsabschnitten heraus und in die wendelförmigen ersten und zweiten Ausnehmungabschnitte hineingleiten, und dann
c) im Laufe der fortgesetzten ersten linearen Betätigung entlang der wendelförmigen ersten und zweiten Ausnehmungabschnitte gleiten, was insbesondere eine Drehung der Welle in einer Drehrichtung und eine Translation der Welle in der ersten linearen Betätigungsrichtung bewirkt; und dann
d) im Laufe der fortgesetzten ersten linearen Betätigung an den zweiten Verzweigungs- und Vereinigungsstellen aus den wendelförmigen ersten und zweiten Ausnehmungsabschnitten heraus und in die linearen zweiten Ausnehmungsabschnitte hineingleiten, und dann
e) im Laufe der fortgesetzten ersten linearen Betätigung in den zweiten linearen Ausnehmungsabschnitten solange gleiten, bis die lineare Umkehrposition der Welle erreicht ist, und dann
f) wenn bei einem Erreichen der Umkehrposition die Welle in einer zweiten, der ersten linearen Betätigungsrichtung entgegengerichteten linearen Betätigungsrichtung betätigt wird, die radialen Vorsprünge entlang der linearen zweiten Ausnehmungsabschnitte in der zweiten linearen Betätigungsrichtung gleiten, und dann
g) im Laufe der fortgesetzten zweiten linearen Betätigung der Welle an den zweiten Verzweigungs- und Vereinigungsstellen aus den linearen zweiten Ausnehmungsabschnitten heraus und in die wendelförmigen ersten und zweiten Ausnehmungabschnitte hineingleiten, und dann
h) im Laufe der fortgesetzten zweiten linearen Betätigung entlang der wendelförmigen ersten und zweiten wendelförmigen Ausnehmungabschnitte gleiten, was insbesondere eine Translation der Welle in der zweiten linearen Betätigungsrichtung und eine weitere Drehung der Welle in derselben Drehrichtung bewirkt, und dann
i) im Laufe der fortgesetzten zweiten linearen Betätigung an den ersten Verzweigungs- und Vereinigungsstellen aus den wendelförmigen ersten und zweiten Ausnehmungsabschnitten heraus und in die linearen ersten Ausnehmungabschnitte hineingleiten, und dann
j) im Laufe der fortgesetzten zweiten linearen Betätigung solange in den linearen ersten Ausnehmungsabschnitten gleiten, bis die Welle wieder die lineare Ausgangsposition wieder erreicht hat.

Gemäß einer Weiterbildung sind die wendelförmigen ersten Ausnehmungsabschnitte und die wendelförmigen zweiten Ausnehmungsabschnitte bevorzugt derart ausgeführt, dass die Welle sich jeweils um beispielsweise 90 Grad dreht, wenn die radialen Vorsprünge zwischen zwei Endpositionen der wendelförmigen ersten und zweiten Ausnehmungsabschnitte gleiten. Die Endpositionen befinden sich beispielsweise an den oben erwähnten ersten und zweiten Verzweigungs- und Vereinigungsstellen. Wie ebenfalls oben ausgeführt, hat dann die Welle und damit auch der erste Werkteilteil eine Drehung von 180 Grad vollzogen sowie eine lineare und reversierende Hubbewegung zwischen der linearen Ausgangsposition und der linearen Umkehrposition.

Es ist klar, dass die oben beschriebene Ausführung lediglich ein Beispiel darstellt und abhängig von der Anordnung, Ausführung und Anzahl von linearen und wendelförmigen Ausnehmungsabschnitten auch beliebig viele rotatorische und lineare Betätigungsmöglichkeiten der Welle und damit des ersten Werkzeugteils realisiert werden können.

Die Erfindung stellt gemäß einem weiteren Aspekt auch ein Formgebungswerkwerkzeug einer Formgebungsvorrichtung, insbesondere ein Spritzgusswerkzeug einer Kunststoff-Spritzgussvorrichtung zur Verfügung, welches wenigstens Folgendes umfasst:
a) eine oben beschriebene Getriebevorrichtung, und
b) das erste Werkzeugteil des Formgebungswerkzeugs, und
c) ein mit dem ersten Werkzeugteil zusammenwirkendes zweites Werkzeugteil des Formgebungswerkzeugs, wobei
d) infolge der linearen Betätigung der Welle der Getriebevorrichtung parallel zur Wellenachse das erste Werkzeugteil in Bezug zu dem zweiten Werkzeugteil linear und/oder rotatorisch bewegt wird.

Abhängig von der Ausführung der erfindungsgemäßen Getriebevorrichtung können daher ein Vielzahl von kinematischen Ausführungen eines Formgebungswerkzeugs in Bezug auf die lineare und/oder rotatorische Bewegungsmöglichkeiten des ersten Werkzeugteils zur Verfügung gestellt werden.

Weiterbildend können bei dem Formgebungswerkwerkzeug das erste Werkzeugteil und das zweite Werkzeugteil infolge der linearen Betätigung der Welle der Getriebevorrichtung zwischen einer Kontaktstellung, in welcher sich das erste Werkzeugteil und das zweite Werkzeugteil entlang einer Trennebene kontaktieren und wenigstens einer abgehobenen Stellung, in welcher das erste Werkzeugteil vom zweiten Werkzeugteil abgehoben und/oder verdreht ist, insbesondere relativ zueinander in Bezug zur Wellenachse linear und/oder rotatorisch beweglich sein, rotatorisch insbesondere um 180 Grad.

Vorzugsweise kann das Formgebungswerkwerkzeug ein Indexplatten-Werkzeug umfassen und die Welle eine Indexwelle, das erste Werkzeugteil eine mit der Welle durch die erste Schnittstelle dreh- und axialfest verbundene Indexplatte und das zweite Werkzeugteil eine insbesondere stationäre Formplatte.

Bei dem Formgebungswerkwerkzeug kann auch weiterbildend vorgesehen sein, die Indexplatte auszubilden, um wenigstens ein Kunststoff-Spritzgussformteil insbesondere im Rahmen eines Mehrkomponenten-Spritzgussverfahrens zu unterschiedlichen Spritz-Stationen der Formgebungsvorrichtung zu bewegen.

Auch kann (können) bei dem Formgebungswerkwerkzeug die Formplatte und/oder die Indexplatte Formnester oder Formnestbereiche aufweisen, welche den unterschiedlichen Spritzstationen der Formgebungsvorrichtung zugeordnet sind.

Gemäß einem weiteren Aspekt umfasst die Erfindung auch eine Formgebungsvorrichtung, insbesondere eine Kunststoff-Spritzgussvorrichtung, ausgebildet und eingerichtet zum Spritzgießen von Kunststoff-Spritzgussformteilen, insbesondere zum Mehrkomponenten-Spritzgießen von Mehrkomponenten-Kunststoff-Spritzgussformteilen, umfassend:
a) wenigstens ein oben beschriebenes Formgebungswerkzeug,
b) einen reversierbaren Linearantrieb, welcher mit der zweiten Schnittstelle der Welle verbunden ist, um die Welle linear und reversierbar parallel zur Wellenachse anzutreiben, insbesondere zwischen der oben erwähnten linearen Ausgangsposition und der linearen Umkehrposition
c) wenigstens eine Plastifizier-Einrichtung zum Schmelzen und Homogenisieren wenigstens eines Kunststoffs.

Unter Mehrkomponentenspritzgießen soll neben dem Mehrkomponentenspritzgießen aus mehreren Kunststoffen auch der schichtweise Aufbau eines Spritzgussteils mit demselben Kunststoff verstanden werden.

Dabei kann der Linearantrieb als Kolben-Zylindertrieb ausgebildet sein.

Weitere die Erfindung verbessernde Maßnahmen werden nachstehend gemeinsam mit der Beschreibung eines Ausführungsbeispiels der Erfindung anhand der Zeichnung näher dargestellt.

### Zeichnung

In der Zeichnung zeigt
- Fig. 1: eine Querschnittsdarstellung einer bevorzugten Ausführungsform einer Getriebevorrichtung gemäß der Erfindung mit einer daran befestigten Indexplatte;
- Fig. 2A: eine schematische und perspektivische Darstellung der Getriebevorrichtung von Fig. 1;
- Fig. 2B: eine schematische Draufsicht der Getriebevorrichtung von Fig. 1;
- Fig. 2C: eine schematische Stirnansicht der Getriebevorrichtung von Fig. 1;
- Fig. 3A: eine schematische und perspektivische Seitenansicht der Getriebevorrichtung von Fig. 1;
- Fig. 3B: eine schematische und perspektivische Unteransicht der Getriebevorrichtung von Fig. 1;
- Fig.4: schematische und perspektivische Seitenansichten der Getriebevorrichtung von Fig. 1 in verschiedenen linearen und rotatorischen Stellungen;
- Fig. 5: eine Querschnittsdarstellung einer bevorzugten Ausführungsform eines Formgebungswerkzeugs, welches die Getriebevorrichtung von Fig. 1 umfasst.

### Beschreibung des Ausführungsbeispiels

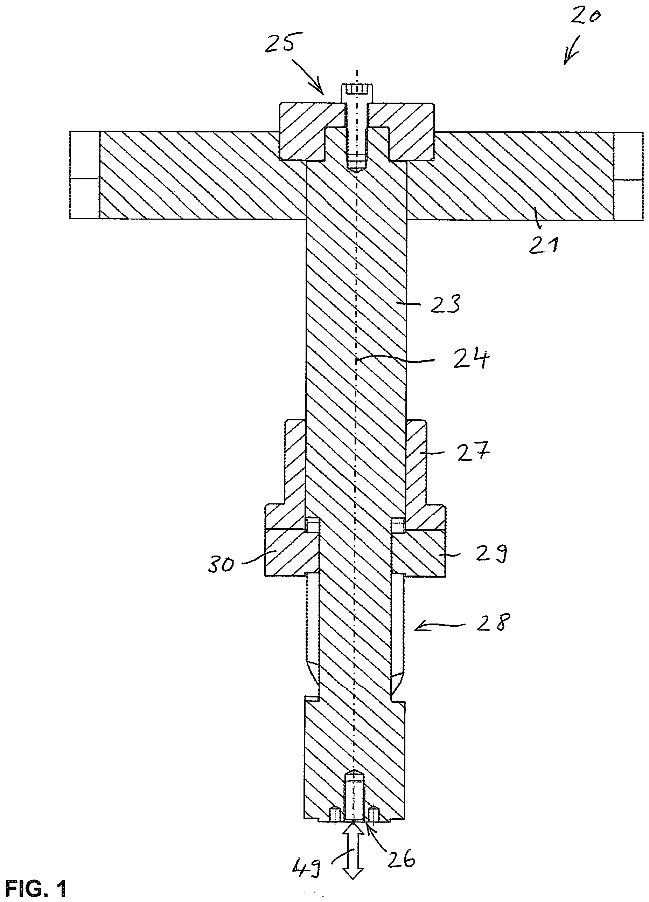

**Fig. 1** zeigt eine Querschnittsdarstellung einer bevorzugten Ausführungsform einer Getriebevorrichtung 20, welche dort insgesamt mit 1 bezeichnet ist.

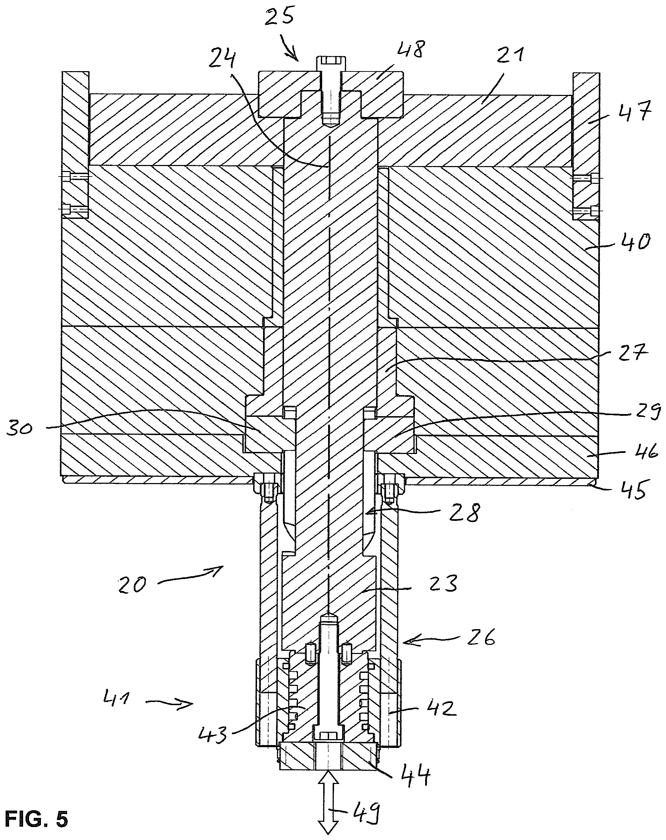

Die Getriebevorrichtung 1 ist ausgebildet und eingerichtet, um eine Antriebsbewegung eines Linearantriebs in eine kombinierte lineare und rotatorische Bewegung hier beispielsweise einer in **Fig. 5** gezeigten Indexplatte 21 eines Kunststoff-Spritzgusswerkzeugs 22 einer Kunststoff-Spritzgussvorrichtung umzusetzen oder zu wandeln. Der Linearantrieb bildet einen Bestandteil des Kunststoff-Spritzgussvorrichtung, welche hier nicht gezeigt ist.

Die Getriebevorrichtung 20 umfasst eine Welle 23 mit einer Wellenachse 24, einer ersten Schnittstelle 25 und einer zweiten Schnittstelle 26, wobei die erste Schnittstelle 25 ausgebildet ist, um die Welle 23 mit der Indexplatte 21 hier beispielsweise dreh- und axialfest zu verbinden, und die zweite Schnittstelle, um die Welle 23 mit dem hier nicht gezeigten Linearantrieb hier beispielsweise dreh-und axialfest zu verbinden.

Weiterhin umfasst die Getriebevorrichtung 20 ein Gehäuse, in welchem die Welle 23 um die Wellenachse 24 drehbar und parallel zur Wellenachse 24 linear beweglich geführt ist. Von dem Gehäuse ist in **Fig. 1** aus Übersichtlichkeitsgründen lediglich ein Führungselement 27 für die Welle 23 gezeigt, hier beispielsweise als Buchse mit einer zentralen Durchgangsöffnung ausgeführt, durch welche die Welle 23 hindurchragt. Die Welle 23 ist daher an dem Führungselement 27 oder durch das Führungselement 27 in dem Gehäuse rotatorisch und linear beweglich geführt und wird durch den an der zweiten Schnittstelle direkt oder indirekt angreifenden Linearantrieb lediglich oder ausschließlich linear angetrieben.

Bei der hier gezeigten bevorzugten Ausführungsform der Getriebevorrichtung 20 sind an einer radial äußeren Umfangsfläche der Welle 23 radiale Ausnehmungen 28 ausgebildet, hier beispielsweise in Form von Nuten. In diese radialen Ausnehmungen 28 ragen hier beispielsweise zwei in Bezug zur Wellenachse 24 diametral angeordnete Nutensteine 29, 30 derart hinein, dass die Nutensteine 29, 30 nach Art einer Kulissenführung in den radialen Ausnehmungen 28 oder entlang der radialen Ausnehmungen 28 gleiten können. Die beiden Nutensteine 29, 30 sind hier an dem Führungselement bzw. der Buchse 27 beispielsweise axial befestigt bzw. angeordnet, während Führungselement bzw. der Buchse 27 mit dem Gehäuse verbunden und demzufolge stationär ist.

Gemäß einer hier nicht gezeugten Ausführungsform können in Umkehrung dieses Prinzips radiale Vorsprünge an der radial äußeren Umfangsfläche der Welle 23 ausgebildet sein und mit komplementären Ausnehmungen des Führungselements 27, hier beispielsweise der Buchse im Sinne einer Kulissenführung zusammenwirken.

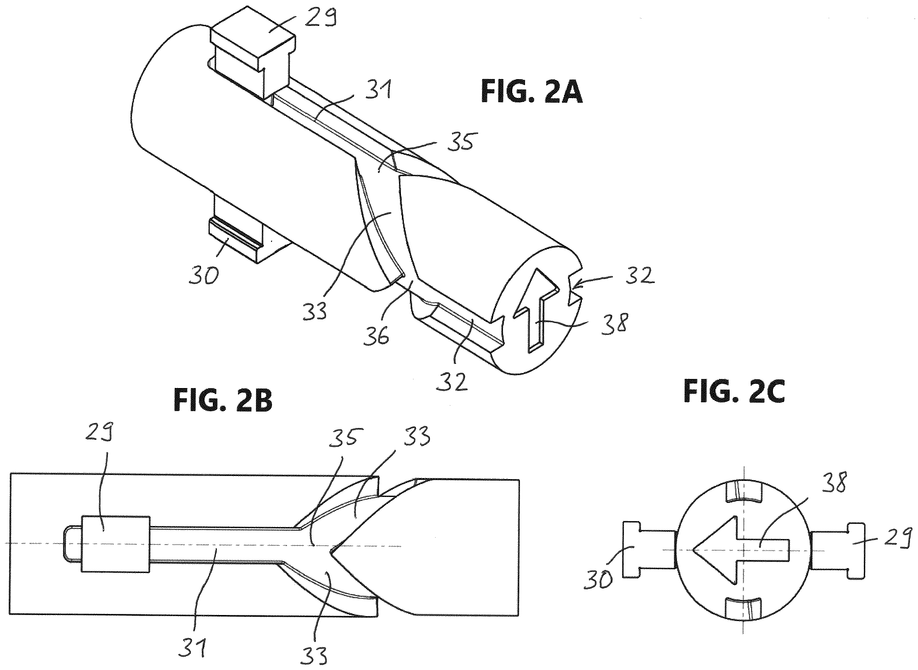

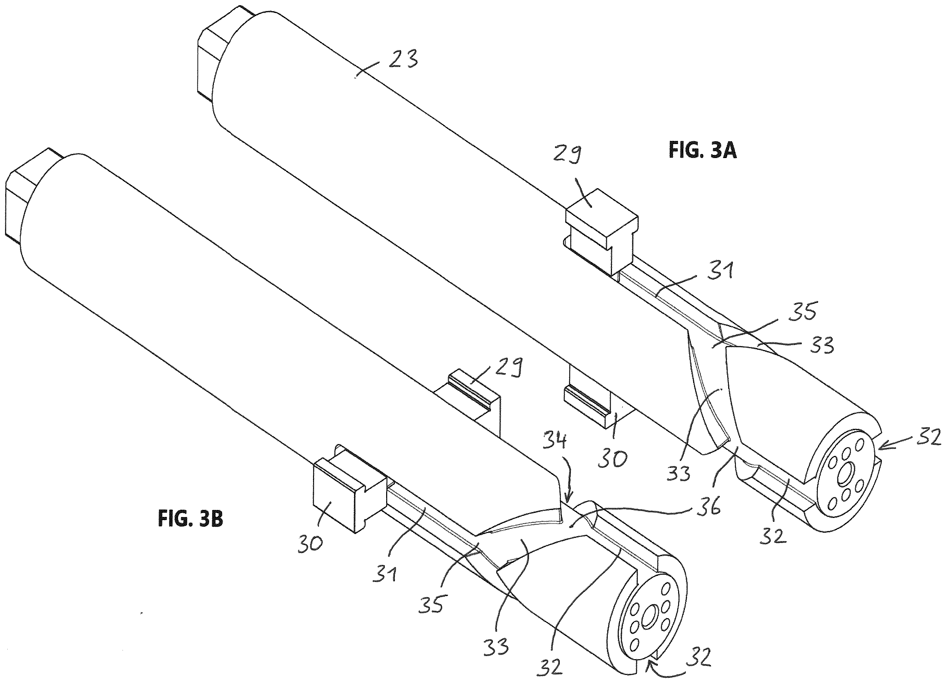

Wie insbesondere aus den **Figuren 2A** bis **2C**, **3A**, **3B** und **4** hervorgeht, weisen die radialen Ausnehmungen 28 lineare erste Ausnehmungsabschnitte 31 und lineare zweite Ausnehmungsabschnitte 32 parallel zur Wellenachse 24 auf, die diametral in Bezug auf die Wellenachse 24 angeordnet sind. Weiterhin weisen die radialen Ausnehmungen 28 koaxial in Bezug auf die Wellenachse zwei wendelförmige erste Ausnehmungsabschnitte 33 und zwei wendelförmige zweite Ausnehmungsabschnitte 34, wobei die wendelförmigen ersten und zweiten Ausnehmungsabschnitte 33, 34 insbesondere diametral in Bezug zur Wellenachse 24 und insbesondere spiegelsymmetrisch in Bezug zu einer die Wellenachse 24 enthaltenden Ebene angeordnet sind

Ebenso umfassen die radialen Ausnehmungen 28 beispielsweise zwei erste Verzweigungs- und Vereinigungsstellen 35 zwischen den linearen ersten Ausnehmungsabschnitten 32 und den wendelförmigen ersten und zweiten Ausnehmungsabschnitten 33, 34 und zwei zweite Verzweigungs- und Vereinigungsstellen 36 zwischen den wendelförmigen ersten und zweiten Ausnehmungsabschnitten 33, 34 und den linearen zweiten Ausnehmungsabschnitten 32, wobei die ersten und zweiten Verzweigungs- und Vereinigungsstellen 35, 36 in Bezug zur Wellenachse 24 jeweils diametral und axial versetzt angeordnet sind. Die wendelförmigen ersten und zweiten Ausnehmungsabschnitte 33, 34 divergieren bzw. konvergieren an den ersten und zweiten Verzweigungs- und Vereinigungsstellen 35, 36 insbesondere in einem spitzen Winkel.

Nicht zuletzt sind auch der erste radiale Nutenstein 29 und der zweite radiale Nutenstein 30 diametral in Bezug zur Wellenachse 24 an dem Führungselement 27 angeordnet.

Die radialen Ausnehmungsabschnitte 28 sind derart ausgeführt, dass die beiden Nutensteine 29, 30 von den linearen Ausnehmungsabschnitten 31, 32 in die wendelförmigen Ausnehmungabschnitte 33, 34 gleiten können und umgekehrt, wozu die entsprechend ausgebildeten ersten und zweiten Verzweigungs- und Vereinigungsstellen 35, 36 jeweils zwischen den linearen und wendelförmigen Ausnehmungsabschnitten 31, 32 bzw. 33, 34 angeordnet sind.

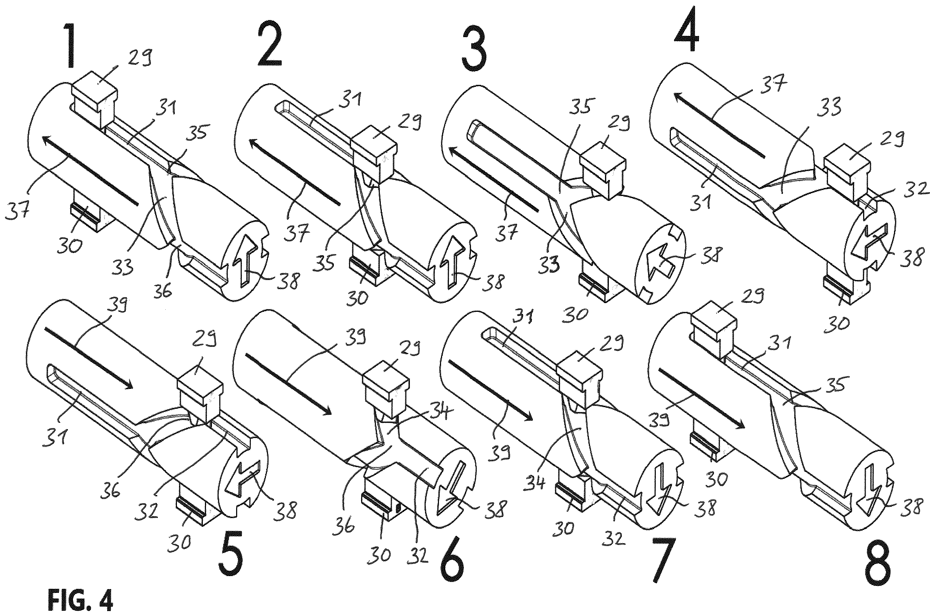

Ausgehend hiervon wird im Folgenden anhand der **Fig. 4** die Funktion der Getriebevorrichtung 20 beschrieben:
Es sei angenommen, dass der Linearantrieb die Welle 23, welche sich im Zustand "1" von **Fig. 4** in einer linearen Ausgangsposition (z.B. Null) befindet, in einer ersten linearen Betätigungsrichtung linear betätigt, welche in **Fig. 4** durch den ersten Pfeil 37 symbolisiert ist. Dann gleiten die beiden Nutensteine 29, 30 ausgehend von der linearen Ausgangsposition der Welle 23 entlang der linearen ersten Ausnehmungsabschnitte 31, 32. Die Winkellage der Welle 23 ist in **Fig. 4** durch den zweiten Pfeil 38 symbolisiert und beträgt in der linearen Ausgangsposition der Welle im Zustand "1" und entlang der linearen ersten Ausnehmungsabschnitte 31, 32 beispielsweise Null Grad, wie in **Fig. 4** der zweite Pfeil 38 veranschaulicht.

Die lineare Ausgangsposition der Welle 23 kann beispielsweise in einer Steuerung des Linearantriebs abgespeichert sein und/oder durch einen Endlagenschalter erfasst werden, der mit der Steuerung zusammenwirkt.

Im Laufe der durch den Linearantrieb fortgesetzten ersten linearen Betätigung in der ersten linearen Betätigungsrichtung 37 gleiten die beiden Nutensteine 29, 30 entlang der beiden linearen ersten Ausnehmungsabschnitte 31, 32 bis zu den beiden ersten Verzweigungs- und Vereinigungsstellen 35, wodurch die Welle 23 sich in dem Zustand "2" von **Fig. 4** befindet, in welchem sie zwar beispielsweise eine der Länge der ersten linearen Ausnehmungsabschnitte 31, 32 parallel zur Wellenachse 24 entsprechende Strecke zurückgelegt hat, aber noch keine Drehung vollzogen hat, so dass immer noch die Ausgangs-Winkellage (z.B. Null Grad) vorliegt.

Im Laufe der fortgesetzten ersten linearen Betätigung der Welle 23 mittels des Linearantriebs in der ersten linearen Betätigungsrichtung 37 gleiten die beiden Nutensteine 29, 30 dann an den ersten Verzweigungs- und Vereinigungsstellen 35 aus den beiden linearen ersten Ausnehmungsabschnitten 31, 32 heraus und in die wendelförmigen ersten und zweiten Ausnehmungabschnitte 33, 34 hinein und in diesen oder an diesen entlang, damit die Welle 23 den in **Fig. 4** mit "3" bezeichneten Zustand einnehmen kann, in welchem sie um ein weiteres Stück in der ersten Betätigungsrichtung 37 von der linearen Ausgangsposition weggerückt und um einen bestimmten Winkel gegenüber der Ausgangs-Winkellage verdreht worden ist, wie der zweite Pfeil 38 veranschaulicht.

Im Laufe der fortgesetzten ersten linearen Betätigung der Welle in der ersten linearen Betätigungsrichtung 37 gelangen die beiden Nutensteine 29, 30 an die zweiten Verzweigungs- und Vereinigungsstellen 36, an welchen sie dann aus den wendelförmigen ersten und zweiten Ausnehmungsabschnitten 33, 34 heraus und in die linearen zweiten Ausnehmungsabschnitte 32 hineingleiten. Der entsprechende Zustand ist in **Fig. 4** mit "4" bezeichnet. Gegenüber dem Zustand "3" ist die Welle 23 um ein weiteres Stück in der ersten Betätigungsrichtung 37 von der linearen Ausgangsposition weggerückt und um einen weiteren Winkel gegenüber der Ausgangs-Winkellage verdreht, wie der zweite Pfeil 38 andeutet.

Im Laufe der fortgesetzten ersten linearen Betätigung in der ersten Betätigungsrichtung 37 gleiten die beiden Nutensteine 29, 30 dann in den linearen zweiten Ausnehmungsabschnitten 32 solange, bis eine lineare Umkehrposition der Welle 23 erreicht ist, die hier beispielsweise an einem Ende der linearen zweiten Ausnehmungsabschnitte 32 angeordnet ist. In der Umkehrposition nimmt die Welle 23 dann beispielsweise eine Winkellage von 90 Grad gegenüber der Ausgangs-Winkellage ein.

Die lineare Umkehrposition der Welle 23 ist beispielsweise in einem Speicher der Steuerung des Linearantriebs abgespeichert, so dass dieser dann bei Erreichen der linearen Umkehrposition in einen Reversierbetrieb umgeschaltet werden kann, in welchem er die Welle 23 im Laufe einer zweiten Betätigung in einer zweiten, in **Fig. 4** durch einen dritten Pfeil 39 symbolisierten Betätigungsrichtung linear antreiben kann. Alternativ oder zusätzlich kann ein weiterer Endschalter vorgesehen sein, welcher die Umkehrposition des Welle 23 erfasst und an die Steuerung des Linearantriebs meldet.

im Laufe der fortgesetzten zweiten linearen Betätigung der Welle in der zweiten linearen Betätigungsrichtung 39 durch den Linearantrieb gleiten die beiden Nutensteine 29, 30 dann entlang der linearen zweiten Ausnehmungsabschnitte 32 bis die zweiten Verzweigungs- und Vereinigungsstellen 36 erreicht sind. Dieser Zustand ist in **Fig. 4** mit "5" bezeichnet. Zwar ändert sich die Winkellage dadurch nicht, wie der zweite Pfeil 38 veranschaulicht, jedoch ist dann die lineare Position der Welle 23 ein Stück weit weg von der Umkehrposition in Richtung zurück auf die Ausgangsposition gerückt.

Im Laufe der fortgesetzten zweiten linearen Betätigung der Welle in der zweiten linearen Betätigungsrichtung 39 gleiten dann die beiden Nutensteine 29, 30 an den zweiten Verzweigungs- und Vereinigungsstellen 36 aus den linearen zweiten Ausnehmungsabschnitten 32 heraus und wieder in die wendelförmigen ersten und zweiten Ausnehmungabschnitte 33, 34 hinein, wodurch die Welle 23 in **Fig. 4** den Zustand "6" einnimmt, in welchem sie gegenüber dem Zustand "5" linear um ein weiteres Stück von der linearen Umkehrposition weg und in Richtung der linearen Ausgangsposition gerückt ist. Außerdem hat sich dabei auch die Winkellage der Welle 23 verändert, indem diese nun mehr als 90 Grad gegenüber der Ausgangs-Winkellage beträgt.

Im Laufe der fortgesetzten zweiten linearen Betätigung in der zweiten linearen Betätigungsrichtung 37 gleiten die beiden Nutensteine 29, 30 dann in den wendelförmigen ersten und zweiten Ausnehmungsabschnitten 33, 34 solange bis die ersten Verzweigungs- und Vereinigungsstellen 35 wieder erreicht sind. Dieser Zustand ist in **Fig. 4** mit "7" bezeichnet. Gegenüber dem Zustand "6" ist dann die Welle 23 linear um ein weiteres Stück von der linearen Umkehrposition weg und in Richtung der linearen Ausgangsposition zurück gerückt. Außerdem hat sich auch die Winkellage der Welle 23 verändert, indem diese nun beispielsweise 180 Grad in Bezug auf die Ausgangs-Winkellage beträgt, wie der zweite Pfeil 38 veranschaulicht.

Im Laufe der fortgesetzten zweiten linearen Betätigung in der zweiten linearen Betätigungsrichtung 39 gleiten dann die beiden Nutensteine 29, 30 an den ersten Verzweigungs- und Vereinigungsstellen 35 aus den wendelförmigen ersten und zweiten Ausnehmungsabschnitten 33, 34 heraus und in die linearen ersten Ausnehmungabschnitte 31 hinein und gleiten in diesen solange, bis durch die Welle 23 wieder die lineare Ausgangsposition des Zustands "1" erreicht ist, welche sie auch in dem Zustand "8" einnimmt, in welchen die beiden Nutensteine 29, 30 vorzugsweise wieder die Enden der ersten linearen Ausnehmungabschnitte erreicht haben. Die Winkellage der Welle 23 bleibt dabei aber unverändert.

Im Rahmen des oben beschriebenen Zyklus ist die Welle 23 durch den Linearantrieb daher zwischen der linearen Ausgangsposition und der Umkehrposition rein linear angetrieben und vollzieht dabei eine Drehung von beispielsweise 180 Grad, wie die Veränderung der Richtung des zweiten Pfeils 38 in **Fig. 4** veranschaulicht. Da die Indexplatte 21 an der ersten Schnittstelle 25 mit der Welle 23 zumindest drehfest verbunden ist, gelten die beschriebenen rotatorischen und translatorischen Bewegungen der Welle 23 dann auch für die Indexplatte 21.

Mittels der Getriebevorrichtung 20 und des reversierenden Linearantriebs der Welle 23 vollzieht die sich mit der Welle 23 translatorisch und rotatorisch mitbewegende Indexplatte 21 eine Abhebebewegung beispielsweise von einem zweiten Werkzeugteil des Kunststoff-Spritzgusswerkzeugs 22 und eine Drehung von hier beispielsweise 180, wodurch beispielsweise beim Mehrkomponenten-Spritzgießen durch die Indexplatte 21 transportierte Vorformlinge verschiedene Spritzstationen der Kunststoff-Spritzgussvorrichtung anfahren können, um dort beispielsweise mit einer weiteren Schicht aus Kunststoff versehen zu werden.

Ein Beispiel für einen Einsatz der oben beschriebenen Getriebevorrichtung 20 in einer bevorzugten Ausführungsform des Kunststoff-Spritzgusswerkzeugs 22 ist in **Fig. 5** gezeigt. Das dortige Kunststoff-Spritzgusswerkzeug 22 umfasst neben der Getriebevorrichtung 20 eine an die zweite Schnittstelle 26 axial angesetzte Kühleinrichtung 41 aus Kühlglocke 42 und Kühleinsatz 43, wobei die Welle 23 dann hier beispielsweise über eine mit der Kühleinrichtung 41 verbundene Betätigungsplatte 44 axial reversierend betätigt wird, wie der vierte Pfeil in **Fig. 5** symbolisiert. Die Kühleinrichtung 41 ist dazu mit der zweiten Schnittstelle 26 der Welle 23 verbunden.

Weiterhin umfasst das Kunststoff-Spritzgusswerkzeug 22 hier beispielsweise eine Wärmedämmplatte 45, eine Aufspannplatte 46 und eine Formplatte als zweites Werkzeugteil 40. Auch ist eine Führungsleiste 47 vorgesehen, welche die Indexplatte 21 an der Formplatte 40 axial, d.h. parallel zur Wellenachse führt.

Die Indexplatte 21 ist wegen der oben beschriebenen Kinematik der Getriebevorrichtung 20 gegenüber der Formplatte 40 in Richtung der Wellenachse 24 gesehen reversierend axial beweglich, d.h. in den beiden oben beschriebenen ersten und zweiten Betätigungsrichtungen 37, 39 sowie um die Wellenachse 24 hier beispielsweise um 180 drehbar. Ein an der ersten Schnittstelle 25 der Welle 23 befestigter Mitnehmer sorgt für eine axial- und drehfeste Verbindung der Indexplatte 21 an der Welle 23.

Es kann dann anhand von **Fig. 5** nachvollzogen werden, dass alleine infolge einer durch einen vierten Pfeil 49 symbolisierten reversierenden linearen Betätigung der Welle 23 durch einen mit der Betätigungsplatte 44 verbundenen Linearantrieb, beispielsweise einen Zylinder-Kolbentrieb, die Indexplatte 21 von der Formplatte 40 axial abgehoben und gegenüber dieser verdreht werden kann.

### Bezugszeichenliste (Teil der Beschreibung)

- 1-8: Zustände der Welle oder der Indexplatte
- 20: Getriebevorrichtung
- 21: Indexplatte
- 22: Kunststoff-Spritzgiesswerkzeug
- 23: Welle
- 24: Wellenachse
- 25: erste Schnittstelle
- 26: zweite Schnittstelle
- 27: Führungselement
- 28: radiale Ausnehmungen
- 29: erster Nutenstein
- 30: zweiter Nutenstein
- 31: lineare erste Ausnehmungsabschnitte
- 32: lineare zweite Ausnehmungsabschnitte
- 33: wendelförmige erste Ausnehmungsabschnitte
- 34: wendelförmige zweite Ausnehmungsabschnitte
- 35: erste Verzweigungs- und Vereinigungsstelle
- 36: zweite Verzweigungs- und Vereinigungsstelle
- 37: erster Pfeil, erste lineare Betätigungsrichtung
- 38: zweiter Pfeil
- 39: dritter Pfeil, zweite lineare Betätigungsrichtung
- 40: zweites Werkzeugteil, Formplatte
- 41: Kühleinrichtung
- 42: Kühlglocke
- 43: Kühleinsatz
- 44: Betätigungsplatte
- 45: Wärmedämmplatte
- 46: Aufspannplatte
- 47: Führungsleiste
- 48: Mitnehmer
- 49: vierter Pfeil, reversierende Betätigung

## Patentansprüche

1. Getriebevorrichtung (20), welche ausgebildet und eingerichtet ist, eine Antriebsbewegung eines Antriebs in eine lineare und rotatorische Bewegung eines ersten Werkzeugteils (21) eines Formgebungswerkzeugs (22) einer Formgebungsvorrichtung, insbesondere einer Kunststoff-Spritzgussvorrichtung umzusetzen, mindestens umfassend
a) eine Welle (23) mit einer Wellenachse (24), einer ersten Schnittstelle (25) und einer zweiten Schnittstelle (26), wobei die erste Schnittstelle (25) ausgebildet ist, um die Welle mit dem ersten Werkzeugteil (21) zu verbinden, und die zweite Schnittstelle (26) ausgebildet ist, um die Welle (23) mit dem Antrieb wenigstens axialfest zu verbinden, und
b) ein Gehäuse, in welchem die Welle (23) um die Wellenachse (24) drehbar und parallel zur Wellenachse (24) linear beweglich geführt ist, **dadurch gekennzeichnet, dass**
c) an einer radial äußeren Umfangsfläche der Welle (23) wenigstens eine radiale Ausnehmung (28) und an einem Führungselement (27) des Gehäuses wenigstens ein mit der wenigstens einen radialen Ausnehmung (28) zusammenwirkender radialer Vorsprung (29, 30) angeordnet oder ausgebildet ist, oder
d) an einer radial äußeren Umfangsfläche die Welle (23) wenigstens ein radialer Vorsprung und an einem Führungselement (27) des Gehäuses wenigstens eine mit dem wenigstens einen radialen Vorsprung zusammenwirkende radiale Ausnehmung angeordnet oder ausgebildet ist, wobei
e) die wenigstens eine radiale Ausnehmung (28) wenigstens einen linearen Ausnehmungsabschnitt (31, 32) parallel zur Wellenachse (24) sowie koaxial in Bezug zur Wellenachse (24) wenigstens einen wendelförmigen Ausnehmungsabschnitt (33, 34) umfasst und der wenigstens eine radiale Vorsprung (29, 30) in die wenigstens eine radiale Ausnehmung (28) radial hineinragt und ausgeführt ist, dass er entlang oder in der wenigstens einen radialen Ausnehmung (28) gleiten kann, und wobei
f) der wenigstens eine lineare Ausnehmungsabschnitt (31, 32) und der wenigstens eine wendelförmige Ausnehmungsabschnitt (33, 34) derart aneinander anschließen, dass der wenigstens eine radiale Vorsprung (29, 30) ausgehend von dem wenigstens einen linearen Ausnehmungsabschnitt (31, 32) in den wenigstens einen wendelförmigen Ausnehmungsabschnitt (33, 34) und/oder ausgehend von dem wenigstens einen wendelförmigen Ausnehmungsabschnitt (33, 34) in den wenigstens einen linearen Ausnehmungsabschnitt (31, 32) gleiten kann, wenn die Welle (23) mittels des Antriebs lediglich linear und parallel zur Wellenachse (24) betätigt wird.

2. Getriebevorrichtung nach Anspruch 1, **dadurch gekennzeichnet, dass** der wenigstens eine radiale Vorsprung (29, 30) mit der wenigstens einen radialen Ausnehmung (28) derart zusammenwirkt, dass allein oder lediglich durch die lineare Betätigung der Welle (23) mittels des Antriebs parallel zur Wellenachse (24)
a) die Welle (23) parallel zur Wellenachse (24) linear verschoben wird, wenn im Laufe der linearen Betätigung der Welle (23) der wenigstens eine radiale Vorsprung (29, 30) in Eingriff mit dem wenigstens einen linearen Ausnehmungsabschnitt (31, 32) gelangt oder steht, und
b) die Welle (23) parallel zur Wellenachse (24) linear verschoben wird und zusätzlich um die Wellenachse (24) dreht, wenn der wenigstens eine radiale Vorsprung (29, 30) im Laufe der linearen Betätigung der Welle (23) in Eingriff mit dem wenigstens einen wendelförmigen Ausnehmungabschnitt (33, 34) gelangt oder steht.

3. Getriebevorrichtung nach Anspruch 1 oder 2, **dadurch gekennzeichnet, dass** die wenigstens eine radiale Ausnehmung (28) als Nut und der wenigstens eine radiale Vorsprung (29, 30) als in die Nut radial hineinragender Nutenstein ausgebildet ist.

4. Getriebevorrichtung nach einem der vorhergehenden Ansprüche, **dadurch gekennzeichnet, dass** mehrere insbesondere in Bezug zur Wellenachse (24) diametral angeordnete radiale Vorsprünge (29, 30) vorgesehen sind, welche gleichzeitig
a) mit mehreren linearen Ausnehmungen (31, 32), und/oder
b) mit mehreren wendelförmigen Ausnehmungen (33, 34) zusammenwirken.

5. Getriebevorrichtung nach einem der vorhergehenden Ansprüche, **dadurch gekennzeichnet, dass** der wenigstens eine wendelförmige Ausnehmungsabschnitt (33, 34) derart ausgeführt ist, dass die Welle (23) sich um einen bestimmten Winkel, insbesondere um 90 Grad dreht, wenn der wenigstens eine radiale Vorsprung (29, 30) zwischen zwei Enden des wenigstens einen wendelförmigen Ausnehmungsabschnitts gleitet.

6. Getriebevorrichtung nach einem der vorhergehenden Ansprüche, **dadurch gekennzeichnet, dass** an wenigstens einer Verzweigungs- und Vereinigungsstelle (35, 36) der wenigstens einen radialen Ausnehmung (28)
a) wenigstens ein wendelförmiger Ausnehmungsabschnitt (33, 34) an wenigstens einen linearen Ausnehmungsabschnitt (31, 32) anschließt, und/oder
b) wenigstens ein linearer Ausnehmungsabschnitt (31, 32) an wenigstens einen wendelförmigen Ausnehmungabschnitt (33, 34) anschließt.

7. Getriebevorrichtung nach einem der vorhergehenden Ansprüche, **dadurch gekennzeichnet, dass** mindestens vorgesehen sind:
a) Zwei lineare erste Ausnehmungsabschnitte (31) und zwei lineare zweite Ausnehmungsabschnitte (32), jeweils diametral in Bezug zur Wellenachse (24) angeordnet, und
b) zwei wendelförmige erste Ausnehmungsabschnitte (33) und zwei wendelförmige zweite Ausnehmungsabschnitte (34), wobei die wendelförmigen ersten und zweiten Ausnehmungsabschnitte (33, 34) koaxial in Bezug zur Wellenachse (24) sind, und
c) vier Verzweigungs- und Vereinigungsstellen, zwei erste Verzweigungs- und Vereinigungsstellen (35) zwischen den linearen ersten Ausnehmungsabschnitten (31) und den ersten und zweiten wendelförmigen Ausnehmungsabschnitten (33, 34) und zwei zweite Verzweigungs- und Vereinigungsstellen (36) zwischen den wendelförmigen ersten und zweiten Ausnehmungsabschnitten (33, 34) und den linearen zweiten Ausnehmungsabschnitten (32), wobei die ersten und zweiten Verzweigungs- und Vereinigungsstellen (35, 36) jeweils diametral in Bezug zur Wellenachse (24) angeordnet sind, und
d) zwei radiale Vorsprünge, ein erster radialer Vorsprung (29) und ein zweiter radialer Vorsprung (30), diametral in Bezug zur Wellenachse (24) angeordnet.

8. Getriebevorrichtung nach einem der vorhergehenden Ansprüche, **dadurch gekennzeichnet, dass** der wenigstens eine lineare Ausnehmungsabschnitt (31, 32) und/oder der wenigstens eine wendelförmige Ausnehmungsabschnitt (33, 34) derart ausgeführt und angeordnet sind, dass die Welle (23) infolge einer ersten linearen Betätigung in einer ersten linearen Betätigungsrichtung (37) von einer linearen Ausgangsposition bis zu einer linearen Umkehrposition und infolge einer insbesondere anschließenden zweiten, in Bezug zur ersten linearen Betätigung entgegengerichteten zweiten linearen Betätigung in einer zweiten linearen Betätigungsrichtung (39) von der linearen Umkehrposition bis in die lineare Ausgangsposition eine Drehung um einen vorbestimmten Winkel vollzieht, insbesondere um 180 Grad.

9. Getriebevorrichtung nach den Ansprüchen 7 und 8, **dadurch gekennzeichnet, dass** sie derart ausgebildet ist, dass
a) wenn die Welle (23) im Laufe der ersten linearen Betätigung in der ersten linearen Betätigungsrichtung (37) ausgehend von der linearen Ausgangsposition betätigt wird, die radialen Vorsprünge (29, 30) entlang der ersten linearen Ausnehmungsabschnitte (31) gleiten, und dann
b) im Laufe der fortgesetzten ersten linearen Betätigung an den ersten Verzweigungs- und Vereinigungsstellen (35) aus den ersten linearen Ausnehmungsabschnitten (31) heraus und in die wendelförmigen ersten und zweiten Ausnehmungabschnitte (33, 34) hineingleiten, und dann
c) im Laufe der fortgesetzten ersten linearen Betätigung entlang der wendelförmigen ersten und zweiten Ausnehmungabschnitte (33, 34) gleiten; und dann
d) im Laufe der fortgesetzten ersten linearen Betätigung an den zweiten Verzweigungs- und Vereinigungsstellen (36) aus den wendelförmigen ersten und zweiten Ausnehmungabschnitten (33, 34) heraus und in die linearen zweiten Ausnehmungsabschnitte (32) hineingleiten, und dann
e) im Laufe der fortgesetzten ersten linearen Betätigung in den linearen zweiten Ausnehmungsabschnitten (32) in der ersten linearen Betätigungsrichtung (37) solange gleiten, bis die lineare Umkehrposition der Welle (23) erreicht ist, und dann
f) wenn bei einem Erreichen der Umkehrposition der Welle (23) die Welle (23) in einer zweiten, der ersten Betätigungsrichtung (37) entgegengerichteten linearen Betätigungsrichtung (39) betätigt wird, die radialen Vorsprünge (29, 30) entlang der linearen zweiten Ausnehmungsabschnitte (32) in der zweiten Betätigungsrichtung (39) gleiten, und dann
g) im Laufe der fortgesetzten zweiten linearen Betätigung an den zweiten Verzweigungs- und Vereinigungsstellen (36) aus den linearen zweiten Ausnehmungabschnitten (32) heraus und in die wendelförmigen ersten und zweiten Ausnehmungabschnitte (33, 34) hineingleiten, und dann
h) im Laufe der fortgesetzten zweiten linearen Betätigung entlang der wendelförmigen ersten und zweiten Ausnehmungabschnitte (33, 34) gleiten, und dann
i) im Laufe der fortgesetzten zweiten linearen Betätigung an den ersten Verzweigungs- und Vereinigungsstellen (35) aus den wendelförmigen ersten und zweiten Ausnehmungabschnitten (33, 34) heraus und in die linearen ersten Ausnehmungabschnitte (31) hineingleiten, und dann
j) im Laufe der fortgesetzten zweiten linearen Betätigung solange in den linearen ersten Ausnehmungsabschnitten (31) gleiten, bis die Welle (23) wieder die lineare Ausgangsposition erreicht hat.

10. Formgebungswerkwerkzeug (22) einer Formgebungsvorrichtung, insbesondere Spritzgusswerkzeug einer Kunststoff-Spritzgussvorrichtung, **dadurch gekennzeichnet, dass** es wenigstens Folgendes umfasst:
a) eine Getriebevorrichtung (20) nach einem der vorhergehenden Ansprüche, und
b) das erste Werkzeugteil (21) des Formgebungswerkzeugs, und
c) ein mit dem ersten Werkzeugteil (21) zusammenwirkendes zweites Werkzeugteil (40) des Formgebungswerkzeugs (22), wobei
d) infolge der linearen Betätigung der Welle (23) der Getriebevorrichtung (20) parallel zur Wellenachse (24) das erste Werkzeugteil (21) in Bezug zu dem zweiten Werkzeugteil (40) linear und/oder rotatorisch bewegt wird.

11. Formgebungswerkwerkzeug nach Anspruch 10, **dadurch gekennzeichnet, dass** das erste Werkzeugteil (21) und das zweite Werkzeugteil (49) infolge der linearen Betätigung der Welle (23) der Getriebevorrichtung (20) zwischen einer Kontaktstellung, in welcher sich das erste Werkzeugteil (21) und das zweite Werkzeugteil (40) entlang einer Trennebene kontaktieren und wenigstens einer abgehobenen Stellung, in welcher das erste Werkzeugteil (21) vom zweiten Werkzeugteil (40) abgehoben und/oder verdreht ist, relativ zueinander beweglich sind.

12. Formgebungswerkwerkzeug nach Anspruch 10 oder 11, **dadurch gekennzeichnet, dass** es ein Indexplatten-Werkzeug umfasst und die Welle (23) eine Indexwelle, das erste Werkzeugteil (21) eine mit der Welle (23) durch die erste Schnittstelle (25) dreh- und axialfest verbundene Indexplatte und das zweite Werkzeugteil (40) eine insbesondere stationäre Formplatte umfasst.

13. Formgebungswerkwerkzeug nach Anspruch 12, **dadurch gekennzeichnet, dass** die Indexplatte ausgebildet ist, um wenigstens ein Kunststoff-Spritzgussformteil insbesondere im Rahmen eines Mehrkomponenten-Spritzgussverfahrens zu unterschiedlichen Spritz-Stationen der Formgebungsvorrichtung zu bewegen.

14. Formgebungswerkwerkzeug nach Anspruch 13, **dadurch gekennzeichnet, dass** die Formplatte und/oder die Indexplatte Formnester oder Formnestbereiche aufweisen, welche den unterschiedlichen Spritzstationen der Formgebungsvorrichtung zugeordnet sind.

15. Formgebungsvorrichtung, insbesondere Kunststoff-Spritzgussvorrichtung, ausgebildet und eingerichtet zum Spritzgießen von Kunststoff-Spritzgussformteilen, insbesondere zum Mehrkomponenten-Spritzgießen von Mehrkomponenten-Kunststoff-Spritzgussformteilen, umfassend:
a) wenigstens ein Formgebungswerkzeug (22) nach einem der Ansprüche 10 bis 14,
b) einen reversierbaren Linearantrieb, welcher mit der zweiten Schnittstelle (26) der Welle (23) der Getriebevorrichtung (20) verbunden ist, um die Welle (23) linear und reversierbar parallel zur Wellenachse (24) anzutreiben,
c) wenigstens eine Plastifizier-Einrichtung zum Schmelzen und Homogenisieren wenigstens eines Kunststoffs.

16. Formgebungsvorrichtung nach Anspruch 15, **dadurch gekennzeichnet, dass** der Linearantrieb als Kolben-Zylindertrieb ausgebildet ist.
